# EUROPEAN PATENT APPLICATION

(11) **EP 2 317 786 A1**
(43) Date of publication of application: **04.05.2011**
(21) Application number: 09806713.5
(22) Date of filing: 11.08.2009
(51) Int. Cl.: H04W 8/06, H04W 60/06, H04W 88/06

(54) **MOBILE COMMUNICATION METHOD, EXCHANGE, AND MOBILE STATION**

(30) Priority: 11.08.2008 JP 2008207508
(71) Applicant: NTT DOCOMO, INC., Chiyoda-ku Tokyo 100-6150 (JP)
(72) Inventor: TANABE, Akimichi c/o NTT DOCOMO Inc., Int.Prop.Dept., Chiyoda-ku, Tokyo 100-6150 (JP); SUZUKI, Keisuke c/o NTT DOCOMO Inc., Int.Prop.Dept., Chiyoda-ku, Tokyo 100-6150 (JP); TANAKA, Itsuma c/o NTT DOCOMO Inc., Int.Prop.Dept., Chiyoda-ku, Tokyo 100-6150 (JP)
(74) Representative: HOFFMANN EITLE
(86) International application number: PCT/JP2009/064177
(87) International publication number: WO 2010/018822

(57) **Abstract**

Disclosed is a mobile communication method having: a step wherein, when the bearer status changes for a cell under the control of a WCDMA mobile communication system while the location of a mobile station (UE) is registered with a WCDMA mobile switching center (SGSN) and an LTE mobile switching center (MME), a synchronization process is performed on the bearer status of the mobile station (UE) between the WCDMA mobile switching center (SGSN) and the LTE mobile switching center (MME); and a step wherein the WCDMA mobile switching center (SGSN) notifies the mobile station (UE) that the synchronization process has occurred. If the bearer status has changed and the mobile station (UE) has received the aforementioned notification, the location of the mobile station (UE) is not registered with the LTE mobile switching center (MME) when moved from a cell under the control of the WCDMA mobile communication system to a cell under the control of the LTE mobile communication system.

## Description

### TECHNICAL FIELD

The present invention relates to a mobile communication method, a mobile switching center, and a mobile station.

### BACKGROUND ART

To a mobile communication system of "E-UTRAN (Evolved-Universal Terrestrial Radio Access Network)/EPC (Evolved Packet Core)" scheme specified in 3GPP, a technique referred to as "ISR (Idle state Signaling Reduction)" is applicable in order to reduce transmissions of unnecessary location registration signals.

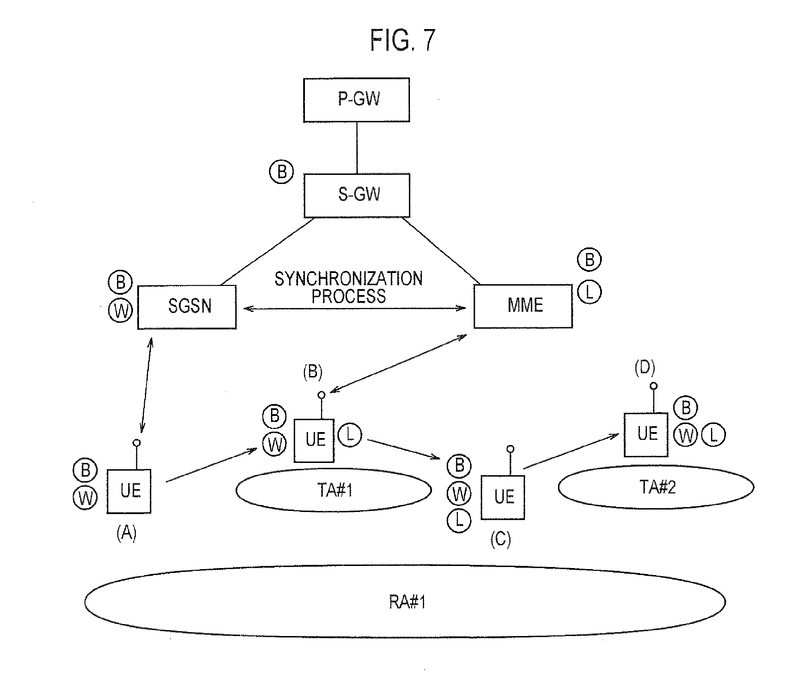

Operation of a mobile communication system to which ISR is applied will be described hereinafter with reference to Fig. 7.

As shown in Fig. 7, in a cell (cell in RA#1) under the control of a WCDMA mobile communication system, a mobile station (UE) in state (A) registers its location with a WCDMA mobile switching center SGSN, and establishes a bearer via the WCDMA mobile switching center SGSN and a gateway device S-GW.

In such a case, the mobile station UE sets location registration status W for the WCDA mobile communication system to "Updated" indicating that the mobile station does not need to register its location with the WCDMA mobile switching center SGSN, and the mobile station UE, the WCDMA mobile switching center SGSN, and the gateway device S-GW set bearer status B to the same status.

In state (B), the mobile station UE moves to a cell (cell in TA#1) under the control of an LTE mobile communication system, and registers its location with an LTE mobile switching center MME. At this time, the LTE mobile switching center MME performs a synchronization process to synchronize with the WCDMA mobile switching center SGSN in terms of the bearer status B in response to the location registration.

Consequently, the mobile station UE sets location registration status L for the LTE mobile communication system to "Updated" indicating that the mobile station does not need to register its location with the LTE mobile switching center MME.

In addition, the same bearer status B is managed among the mobile station UE, the WCDMA mobile switching center SGSN, the LTE mobile switching center MME, and the gateway device S-GW.

In state (C), even when the mobile station UE moves to the cell (cell in RA#1) under the control of the WCDMA mobile communication system, the mobile station UE does not need to register its location with the WCDMA mobile switching center SGSN, because the location registration status W for the WCDMA mobile communication system is "Updated."

Similarly, in status (D), even when the mobile station UE moves to a cell (cell in TA#2) under the control of the LTE mobile communication system, the mobile station UE does not need to register its location with the LTE mobile switching center MME, because the location registration status L for the LTE mobile communication system is "Updated."

### SUMMARY OF THE INVENTION

### PROBLEM TO BE SOLVED BY THE INVENTION

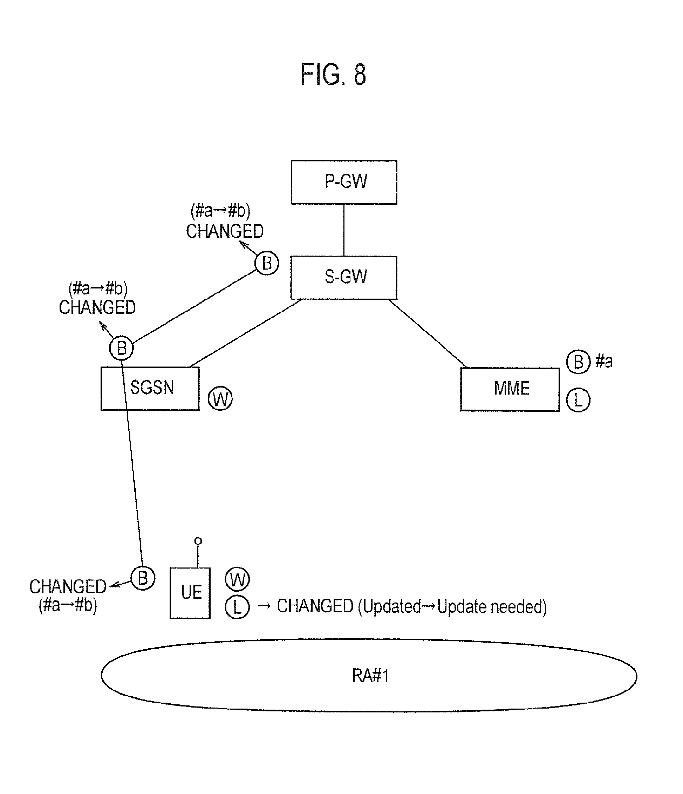

However, as shown in Fig. 8, in a mobile communication system to which a conventional ISR is applied, a mobile station UE, a WCDMA mobile switching center SGSN, an LTE mobile switching center MME., and a gateway device S-GW manages the same bearer status B, that is, they are synchronized with each other in terms of the bearer status B. Under this condition, if the mobile station UE activates, modifies, or deletes a bearer in a cell (cell in RA#1) under the control of the WCDMA mobile communication system, the bearer status B in the mobile station UE, the WCDMA mobile switching center SGSN, and the gateway device S-GW changes from "#a" to "#b." However, the bearer status B in the LTE mobile switching center MME remains "#a" and the bearer status goes out of synchronization.

In such a case, the mobile station UE sets location registration status L for an LTE mobile communication system to "Updated needed" indicating that the mobile station needs to register its location with the LTE mobile switching center MME.

Then, as shown in Fig, 9, when the mobile station UE moves to a cell (cell in TA#1) under the control of the LTE mobile communication system, the mobile station UE registers its location with the LTE mobile switching center MME, because location registration status L for the LTE mobile communication system is "Update needed." On this occasion, the LTE mobile switching center MME performs a synchronization process to synchronize with the WCDMA mobile switching center SGSN in terms of the bearer status B in response to the location registration.

Thus, the mobile communication system to which the conventional ISR is applied has a problem that when bearer activation, modification, or deletion is performed, the effect of reducing location registration signals by the ISR is lost, and connection delay occurs when mobile communication systems as connection destinations are switched from one to another.

Hence, the present invention was made in light of the problem described above, and an objective of the present invention is to provide a mobile communication method, a mobile switching center, and a mobile station which can avoid unnecessary location registration even if bearer activation, modification, or deletion is performed in a mobile communication system to which the ISR is applied.

### MEANS FOR SOLVING THE PROBLEMS

A first aspect of the present invention is summarized as a mobile communication method including: a step A of performing a synchronization process to synchronize a mobile switching center of a first communication scheme and a mobile switching center of a second communication scheme with each other in terms of bearer status of a mobile station when the mobile station with a location thereof registered with the mobile switching center of the first communication scheme and the mobile switching center of the second communication scheme changes the bearer status in a cell under the control of the mobile communication system of the first communication scheme; and a step B of notifying, from the mobile switching center of the first communication scheme to the mobile station, that the synchronization process has been performed, wherein if the mobile station has received the notification although the bearer status has been changed, the mobile station does not register the location with the mobile switching center of the second communication scheme when the mobile station moves from the cell under the control of the mobile communication system of the first communication scheme to a cell under the control of the mobile communication system of the second communication scheme.

A second aspect of the present invention is summarized as a mobile switching center of a first communication scheme, including: a synchronization processing unit configured to perform a synchronization process to synchronize with a mobile switching center of a second communication scheme in terms of bearer status of a mobile station when the mobile station with a location thereof registered with the mobile switching center of the first communication scheme and the mobile switching center of the second communication scheme changes the bearer status in a cell under the control of a mobile communication system of the first communication scheme, and a notifying unit configured to notify the mobile station that the synchronization process has been performed.

A third aspect of the present invention is summarized as a mobile station, including a location registration processing unit configured not to register a location thereof with a mobile switching center of a second communication scheme when the mobile station moves from a cell under the control of a mobile communication system of a first communication scheme to a cell under the control of a mobile communication system of the second communication scheme, if the mobile station has received from the mobile switching center of the first communication scheme a notification that a synchronization process has been performed to synchronize with the mobile switching center of the second communication scheme in terms of bearer status, although the mobile station with the location registered with the mobile switching center of the first communication scheme and the mobile switching center of the second communication scheme has changed the bearer status in the cell under the control of the mobile communication system of the first communication scheme.

### EFFECT OF THE INVENTION

As described above, according to the present invention, provide are the mobile communication method, the mobile switching center, and the mobile station which can avoid unnecessary location registration even if bearer activation, modification, or deletion is performed in a mobile communication system to which the ISR is applied.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile switching center according to the first embodiment of the present invention.
[Fig. 3] Fig. 3 is a functional block diagram of a mobile station according to the first embodiment of the present invention.
[Fig. 4] Fig. 4 is a view for illustrating operation of the mobile communication system according to the first embodiment of the present invention.
[Fig. 5] Fig. 5 is a flow chart showing operation of the mobile switching center according to the first embodiment of the present invention.
[Fig. 6] Fig. 6 is a flow chart showing operation of the mobile station according to the first embodiment of the present invention.
[Fig. 7] Fig. 7 is a view for illustrating operation of a conventional mobile communication system.
[Fig. 8] Fig. 8 is a view for illustrating operation of a conventional mobile communication system.

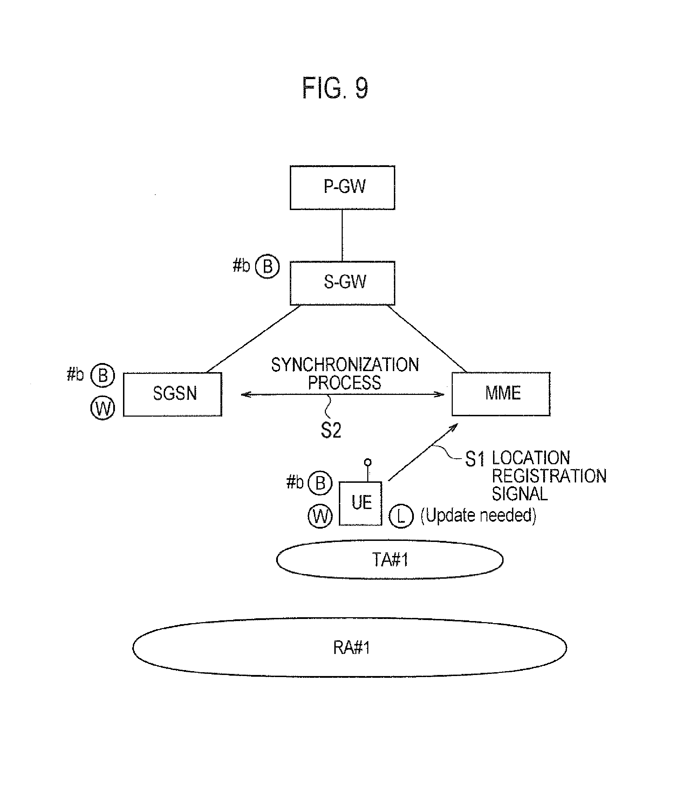

[Fig. 9] Fig. 9 is a view for illustrating operation of a conventional mobile communication system.

### EMBODIMENTS FOR CARRYING OUT THE INVENTION

### (Configuration of a mobile communication system according to a first embodiment of the present invention)

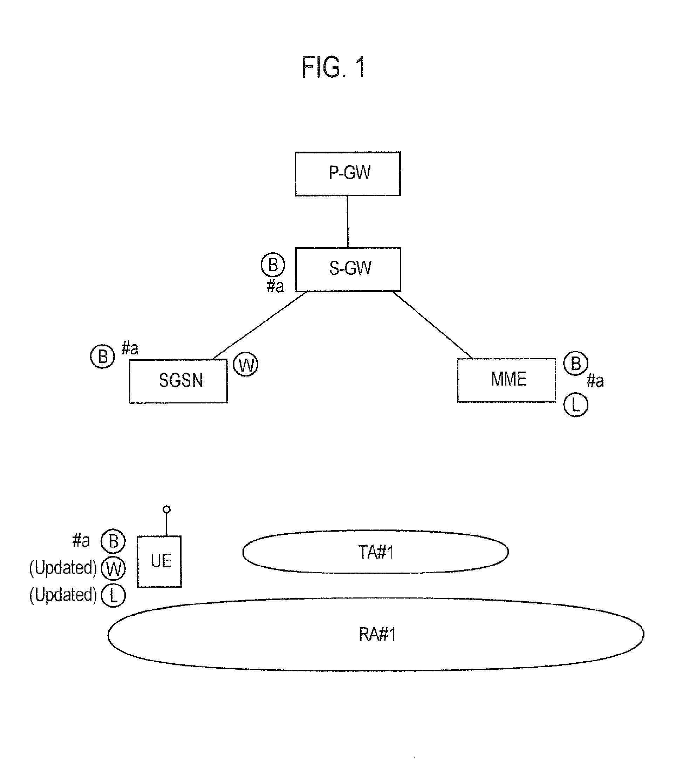

A configuration of a mobile communication system according to a first embodiment of the present invention will be described hereinafter with reference to Figs. 1 to 3.

As shown in Fig. 1, the mobile communication system includes a gateway device P-GW (PDN-Gateway), a gateway device S-GW (Serving-Gateway), a WCDMA mobile switching center SGSN, and an LTE mobile switching center MME.

In addition, for convenience of explanation, the "WCDMA scheme" is described as a "first communication scheme" and the "LTE scheme" a "second communication scheme" in this description. However, the present invention is not limited to such cases.

For example, the present invention may also be applicable to a case in which the "WCDMA scheme" is considered a "second communication scheme" and the LTE scheme" a "first communication scheme," and a case in which other communication schemes are considered a "first communication scheme" and a "second communication scheme."

In addition, in an example of Fig. 1, a mobile station UE is located in a cell (cell in RA#1) under the control of a WCDMA mobile communication system, and also registers its location with the WCDMA mobile switching center SGSN and the LTE mobile switching center MME.

In addition, same bearer status B (#a) is managed among the mobile station UE, the WCDMA mobile switching center SGSN, the LTE mobile switching center MME, and the gateway device S-GW That is, the bearer status B is synchronized.

Furthermore, the mobile station UE sets location registration status W for the WCDMA mobile communication system and location registration status L for the LTE mobile communication system to "Updated."

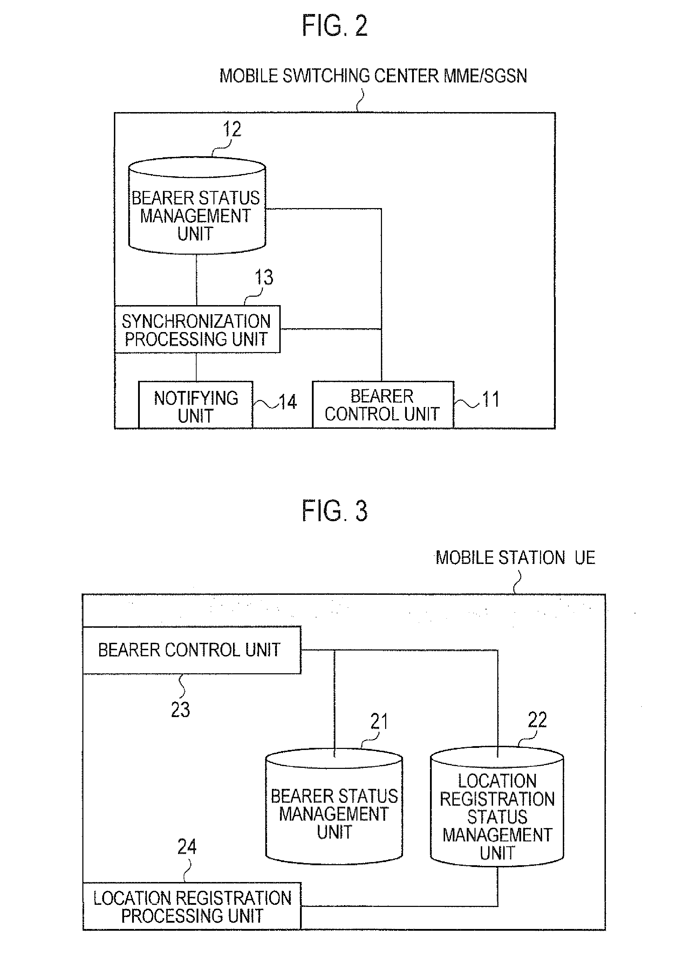

As shown in Fig. 2, the WCDMA mobile switching center SGSN and the LTE mobile switching center MME include a bearer control unit 11, a bearer status management unit 12, a synchronization processing unit 13, and a notifying unit 14.

The bearer control unit 11 is configured to control bearer activation, modification, deletion or the like. A bearer herein refers to a connection for performing packet communications between the mobile station UE and a specific connection destination APN.

Specifically, in response to a request from each mobile station UE, the bearer control unit 11 may be configured to establish (start) a new bearer in a state where no bearer is established, or configured to disconnect (delete) an already established bearer, and is configured to change (modify) connection status of an already established bearer.

The bearer status management unit 12 is configured to manage the bearer status B of each mobile station UE. For example, as the bearer status B of each mobile station UE, the bearer status management unit 12 manages, for each bearer, an IP address assigned to each mobile station UE, a connection destination APN, QOS, or a gateway device to go through. The bearer status management unit 12 may also manage the number of bearers established at the mobile station UE as the bearer status B.

The synchronization processing unit 13 is configured to perform a synchronization process to synchronize with the LTE mobile switching center MME in terms of the bearer status B of the mobile station UE, when the mobile station UE changes the bearer status B in a cell (cell in RA#1) under the control of the WCDMA mobile communication system in a state where the mobile station registers its location with the WCDMA mobile switching center SGSN and the LTE mobile switching center MME.

The synchronization processing unit 13 may also be configured not to perform the synchronization process described above when the mobile station UE changes the bearer status B and the number of bearers goes to 0.

The synchronization processing unit 13 is also configured to perform the synchronization process described above when it receives a location registration signal from the mobile station UE.

The notifying unit 14 is configured to notify the mobile station UE that the synchronization process described above has been performed.

As shown in Fig. 3, the mobile station UE includes a bearer status management unit 21, a location registration status management unit 22, a bearer control unit 23, and a location registration processing unit 24.

The bearer status management unit 21 is configured to manage the bearer status B of the aforementioned mobile station UE.

The location registration status management unit 22 is configured to manage location registration status W for the WCDMA mobile communication system which indicates whether or not it needs to register its location with the WCDMA mobile switching center SGSN, and location registration status L for the LTE mobile communication system which indicates whether or not it needs to register its location with the LTE mobile switching center.

Specifically, the location registration status management unit 22 sets "Update needed" to the location registration status W for the WCDMA mobile communication system if it needs to register its location with the WCDMA mobile switching center SGSN. The location registration status management unit 22 sets "Updated" to the location registration status W for the WCDMA mobile communication system if it does not need to register its location with the WCDMA mobile switching center SGSN.

Similarly, the location registration status management unit 22 sets "Update needed" to the location registration status W for the LTE mobile communication system if it needs to register its location with the LTE mobile switching center MME. The location registration status management unit 22 sets "Updated" to the location registration status W for the LTE mobile communication system if it does not need to register its location with the LTE mobile switching center MME.

Typically, the location registration status management unit 22 is configured to set "Update needed" to the location registration status W for the WCDMA mobile communication system or the location registration status L for the LTE mobile communication system, when the bearer status B is changed (that is, when it does not receive the above notification).

However, the location registration status management unit 22 is configured to, if the location registration status management unit 22 has received the above notification even though the bearer status B has been changed, not set the location registration status W for the WCDMA mobile communication system or the location registration status L for the LTE mobile communication system to indicate that the mobile station needs to register its location with the WCDMA mobile switching center SGSN or the LTE mobile switching center MME. That is, the location registration status management unit 22 is configured not to set "Update needed" to the location registration status W for the WCDMA mobile communication system or to the location registration status L for the LTE mobile communication system (i.e., to keep "Updated" unchanged in the location registration status W for the WCDMA communication system or the location registration status L for the LTE communication system).

The bearer control unit 23 is configured to control activation, modification, deletion or the like of a bearer of the aforementioned mobile station UE.

Specifically, the bearer control unit 23 may be configured to establish (start) a new bearer in a state where no bearer is established in the aforementioned mobile station UE, or may be configured to disconnect (delete) an already established bearer, and is configured to change (modify) connection status of an already established bearer.

The location registration processing unit 24 is configured to refer to the location registration status W for the WCDMA mobile communication system or the location registration status L for the LTE mobile communication system and determine whether or not to register its location with the WCDMA mobile switching center SGSN or the LTE mobile switching center MME.

Specifically, the location registration processing unit 24 is configured to determine that, when the mobile station UE moves to a cell (cell in RA#1) under the control of the WCDMA mobile communication system or a cell (cell in TA#1 or TA#2) under the control of the LTE mobile communication system, the location registration processing unit needs to register its location with the WCDMA mobile switching center SGSN or the LTE mobile switching center MME if "Update needed" is set in the location registration status W for the WCDMA mobile communication system or the location registration status L for the LTE mobile communication system, and it does not need to register its location with the WCDMA mobile switching center SGSN or the LTE mobile switching center MME if "Updated" is set in the location registration status W for the WCDMA mobile communication system or the location registration status L for the LTE mobile communication system.

### (Configuration of a mobile communication system according to a first embodiment of the present invention)

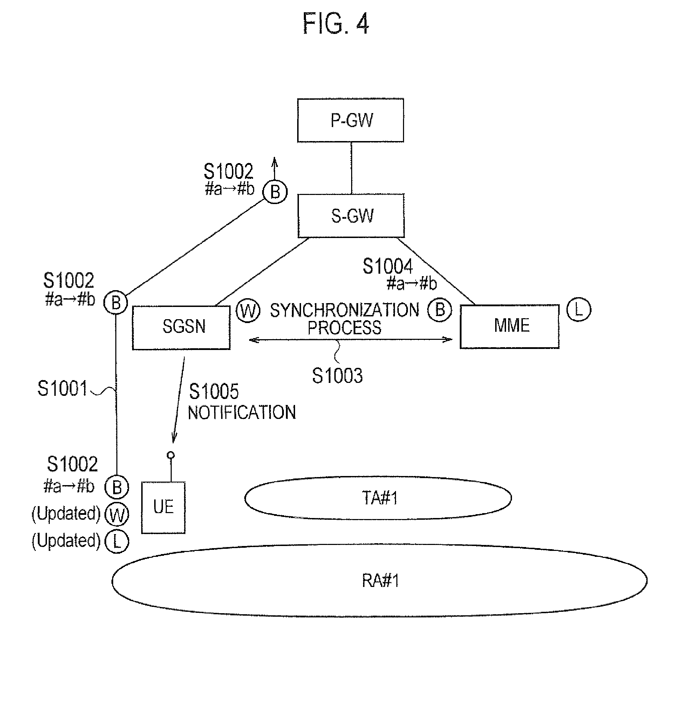

An operation of a mobile communication system according to a first embodiment of the present invention will be described hereinafter with reference to Figs. 4 to 6.

First, in the mobile communication system according to the embodiment, operation in a case where a mobile station UE in the foregoing state of Fig. 1 changes the bearer status B will be described hereinafter with reference to Fig. 4.

As shown in Fig. 4, when the mobile station UE performs bearer activation, modification, or deletion in a cell (cell RA#1) under the control of the WCDMA mobile communication system in step S1001, the bearer status B in the mobile station UE, a gateway device S-GW, and a WCDMA mobile switching center SGSN is changed from "#a" to "#b" in step S1002.

In step S1003, the WCDMA mobile switching center SGSN performs a synchronization process to synchronize with an LTE mobile switching center MME in terms of the bearer status B in response to the change in the bearer status B. As a result, the bearer status B in the LTE mobile switching center MME is changed from "#a" to "#b" in step S1004.

In step S1005, the WCDMA mobile switching center SGSN notifies the mobile station UE that the synchronization process described above has been performed.

Since the mobile station UE has received the notification described above, the mobile station UE does not change location registration status L for an LTE mobile communication system (i.e., the mobile station UE keeps "Updated" unchanged in the location registration status L for the LTE mobile communication system) although it has changed the bearer status B.

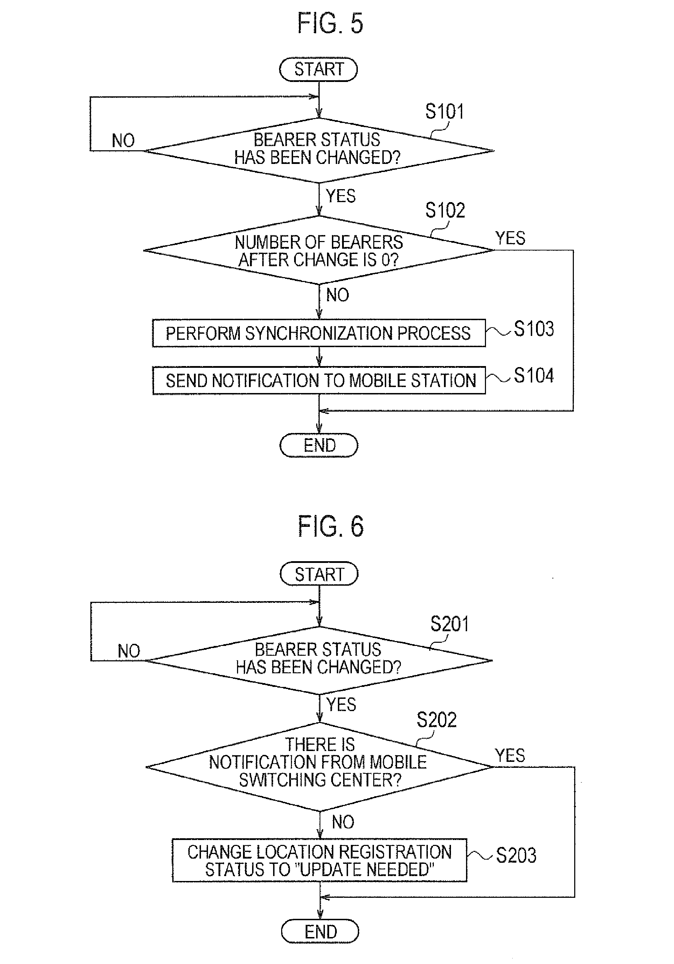

Second, operation of the WCDMA mobile switching center SGSN or the LTE mobile switching center MME according to the embodiment will be described with reference to Fig. 5.

As shown in Fig. 5, in step S101 the WCDMA mobile switching center SGSN or the LTE mobile switching center MME judges whether or not the bearer status B of the mobile station UE located in a cell (cell in RA#1) under the control of the WCDMA mobile communication system or a cell (cell in TA#1 or TA#2) under the control of the LTE mobile communication system has been changed.

If it is judged that the bearer status B of the aforementioned mobile station UE has been changed, in step S102 the WCDMA mobile switching center SGSN or the LTE mobile switching center MME judges whether or not the number of bearers after the change is 0 in the aforementioned mobile station UE.

If it is judged that the number of bearers after the change is 0, the operation ends, and if it is judged that the number of bearers after the change is not 0, the operation proceeds to step S103.

In step S103, the WCDMA mobile switching center SGSN or the LTE mobile switching center MME performs a synchronization process to synchronize with the LTE mobile switching center MME or the WCDMA mobile switching center SGSN, respectively, in terms of the bearer status B of the aforementioned mobile station UE.

In step S104, the WCDMA mobile switching center SGSN or the LTE mobile switching center MME notifies the mobile station UE that the synchronization process described above has been performed.

Third, a mobile station UE according to the embodiment will be described hereinafter with reference to Fig. 6.

As shown in Fig. 6, in step S201, the mobile station UE with its location registered with the WCDMA mobile switching center SGSN and the LTE mobile switching center MME judges whether or not the bearer status B has been changed in a cell (cell in RA#1) under the control of the WCDMA mobile communication system or a cell (cell in TA#1 or TA#2) under the control of the LTE mobile communication system.

If it is judged that the aforementioned bearer status B has been changed, in step S202 the mobile station UE judges whether it has received from the WCDMA mobile switching center SGSN and the LTE mobile switching center MME a notification indicating that the synchronization process described above has been performed.

If it is not judged that the notification has been received, the operation proceeds to step S203, and if it is judged that the notification has been received, the operation ends.

In step S203, the mobile station UE changes the location registration status W for the WCDMA mobile communication system or the location registration status L for the LTE mobile communication system to "Update needed."

### (Operation and effect of the mobile communication system according to the first embodiment of the present invention)

With the mobile communication system according to the first embodiment of the present invention, if bearer activation, modification, or deletion is performed in a mobile communication system to which ISR is applied, a synchronization process is performed to synchronize a WCDMA mobile switching center SGSN and an LTE mobile switching center MME in terms of the bearer status B. If the synchronization process is performed, a mobile station UE can avoid unnecessary location registration, because the mobile station UE does not need to register its location even when it moves from a cell (cell in RA#1) under a WCDMA mobile communication system to a cell (cell in TA#1 or TA#2) under the control of an LTE mobile communication system.

In addition, in the LTE mobile communication system, at least one bearer must be established for the mobile station UE. For this reason, when the number of bearers of the mobile station UE located in the cell under the control of the WCDMA mobile communication system is 0, the aforementioned mobile station UE becomes detached if the foregoing synchronization process is performed to synchronize the WCDMA mobile switching center SGSN and the LTE mobile switching center MME in terms of the bearer status B.

Thus, in the mobile communication system according to the first embodiment of the present invention, a failure that the mobile station UE becomes detached can be resolved by not performing the above-described synchronization process for the bearer status B when the number of bearers of the mobile station UE located in the cell under the control of the WCDMA mobile communication system is 0.

The feature of the present embodiment described above may be expressed as follows.

A first feature of the present embodiment is summarized as a mobile communication method including: a step A of performing a synchronization process to synchronize a mobile switching center SGSN of an WCDMA scheme (a first communication scheme) and a mobile switching center MME of a LTE (a second communication scheme) with each other in terms of bearer status B of a mobile station UE when the mobile station UE with a location thereof registered with the mobile switching center SGSN of the WCDMA scheme and the mobile switching center SGSN of the WCDMA scheme changes the bearer status B in a cell (a cell in RA#1) under the control of the mobile communication system of the LTE scheme; and a step B of notifying, from the mobile switching center SGSN of the WCDMA scheme to the mobile station UE, that the synchronization process has been performed, wherein if the mobile station UE has received the notification although the bearer status B has been changed, the mobile station UE does not register the location with the mobile switching center MME of the LTE scheme when the mobile station UE moves from a cell (a cell in RA#1) under the control of the mobile communication system of the WCDMA scheme to the cell (a cell in TA#1 or TA#2) under the control of the mobile communication system of the LTE scheme.

Alternately, a first feature of the present embodiment is summarized as a mobile communication method including: a step A of performing a synchronization process to synchronize a mobile switching center MME of an LTE scheme (a first communication scheme) and a mobile switching center SGSN of a WCDMA (a first communication scheme) with each other in terms of bearer status B of a mobile station UE when the mobile station UE with a location thereof registered with the mobile switching center MME of the LTE scheme and the mobile switching center AGAN of the WCDMA scheme changes the bearer status B in a cell (a cell in TA#1 or TA#2) under the control of the mobile communication system of the LTE scheme; and a step B of notifying, from the mobile switching center MME of the LTE scheme to the mobile station UE, that the synchronization process has been performed, wherein if the mobile station UE has received the notification although the bearer status B has been changed, the mobile station UE does not register the location with the mobile switching center SGSN of the WCDMA scheme when the mobile station UE moves from the cell (a cell in TA#1 or TA#2) under the control of the mobile communication system of the LTE scheme to a cell (a cell in RA#1) under the control of the mobile communication system of the WCDMA scheme.

In the first feature of the present invention, the mobile communication method may includes the steps of: managing by the mobile station UE location registration status L indicating whether or not the mobile station UE needs to register the location with the mobile switching center MME of the LTE scheme; and determining by the mobile station UE whether or not the mobile station UE needs to register the location with the mobile switching center MME of the LTE scheme depending on the location registration status L, when the mobile station UE moves to the cell (the cell in TA#1 or TA#2) under the control of the mobile communication system of the LTE scheme, wherein if the mobile station UE has received the notification although it has changed the bearer status B, the mobile station UE may not set, for the location registration status L, "Update needed" to indicate that the mobile station needs to register the location with the mobile switching center MME of the LTE scheme.

Alternately, in the first feature of the present invention, the mobile communication method may includes the steps of: managing by the mobile station UE location registration status W indicating whether or not the mobile station UE needs to register the location with the mobile switching center SGSN of the WDMA scheme; and determining by the mobile station UE whether or not the mobile station UE needs to register the location with the mobile switching center SGSN of the WCDMA scheme depending on the location registration status W, when the mobile station UE moves to the cell (the cell in RA#1) under the control of the mobile communication system of the WCDMA scheme, wherein if the mobile station UE has received the notification although it has changed the bearer status B, the mobile station UE may not set, for the location registration status W, "Update needed" to indicate that the mobile station needs to register the location with the mobile switching center MME of the LTE scheme.

In the first feature of the present invention, the synchronization process may not be performed if the number of bearers is 0 after the mobile station changes the bearer status, in the step A.

A second feature of the present embodiment is summarized as a mobile switching center SGSN of a WCDMA scheme, includes: a synchronization processing unit 13 configured to perform a synchronization process to synchronize with a mobile switching center MME of an LTE scheme in terms of bearer status B of a mobile station UE when the mobile station UE with a location thereof registered with the mobile switching center SGSN of the WCDMA scheme and the mobile switching center MME of the LTE scheme changes the bearer status B in a cell (a cell in RA#1) under the control of a mobile communication system of the WCDMA scheme, and a notifying unit 14 configured to notify the mobile station UE that the synchronization process has been performed.

Alternately, a second feature of the present embodiment is summarized as a mobile switching center MME of a LTE scheme, includes: a synchronization processing unit 13 configured to perform a synchronization process to synchronize with a mobile switching center SGSN of an WCDMA scheme in terms of bearer status B of a mobile station UE when the mobile station UE with a location thereof registered with the mobile switching center MME of the LTE scheme and the mobile switching center SGSN of the WCDMA scheme changes the bearer status B in a cell (a cell in TA#1 or TA#2) under the control of a mobile communication system of the LTE scheme, and a notifying unit 14 configured to notify the mobile station UE that the synchronization process has been performed.

In the second feature of the present embodiment, the synchronization processing unit 13 may be configured not to perform the synchronization process if the number of bearers is 0 after the mobile station changes the bearer status.

A third feature of the present embodiment is summarized as a mobile station UE, includes a location registration processing unit 24 configured not to register a location thereof with a mobile switching center MME of an LTE scheme when the mobile station UE moves from a cell (a cell in RA#1) under the control of a mobile communication system of a WCDMA scheme to a cell (a cell in TA#1 or TA#2) under the control of a mobile communication system of the LTE scheme, if the mobile station UE has received from the mobile switching center SGSN of the WCDMA scheme a notification that a synchronization process has been performed to synchronize with the mobile switching center MME of the LTE scheme in terms of bearer status B, although the mobile station UE with the location registered with the mobile switching center SGSN of the WCDMA scheme and the mobile switching center MME of the LTE scheme has changed the bearer status B in the cell (the cell in RA#1) under the control of the mobile communication system of the WCDMA scheme.

Alternately, a third feature of the present embodiment is summarized as a mobile station UE, includes a location registration processing unit 24 configured not to register a location thereof with a mobile switching center SGSN of a WCDMA scheme when the mobile station UE moves from a cell (a cell in TA#1 or TA#2) under the control of a mobile communication system of an LTE scheme to a cell (a cell in RA#1) under the control of a mobile communication system of the WCDMA scheme, if the mobile station UE has received from the mobile switching center MME of the LTE scheme a notification that a synchronization process has been performed to synchronize with the mobile switching center SGSN of the WCDMA scheme in terms of bearer status B, although the mobile station UE with the location registered with the mobile switching center MME of the LTE scheme and the mobile switching center SGSN of the WCDMA scheme has changed the bearer status B in the cell (the cell in TA#1 or TA#2) under the control of the mobile communication system of the LTE scheme.

In the third feature, the mobile station UE may include a location registration status management unit 22 configured to manage location registration status L indicating whether or not the mobile station UE needs to register the location with the mobile switching center MME of the LTE scheme, wherein the location registration processing unit 24 is configured to determine whether or not to register the location with the mobile switching center MME of the LTE scheme, depending on the location registration status L, when the mobile station UE moves to the cell (the cell in TA#1 or TA#2) under the control of the mobile communication system of the LTE scheme, and the location registration status management unit 22 may be configured not to set the location registration status L to indicate that the mobile station UE needs to register the location with the mobile switching center MME of the LTE scheme, if the location registration status management unit 22 has received the notification although the bearer status B has been changed.

Alternately, in the third feature, the mobile station UE may include a location registration status management unit 22 configured to manage location registration status W indicating whether or not the mobile station UE needs to register the location with the mobile switching center SGSN of the WCDMA scheme, wherein the location registration processing unit 24 is configured to determine whether or not to register the location with the mobile switching center SGSN of the WCDMA scheme, depending on the location registration status W, when the mobile station UE moves to the cell (the cell in RA#1) under the control of the mobile communication system of the WCDMA scheme, and the location registration status management unit 22 may be configured not to set the location registration status W to indicate that the mobile station UE needs to register the location with the mobile switching center SGSN of the WCDMA scheme, if the location registration status management unit 22 has received the notification although the bearer status B has been changed.

Note that operation of the above described mobile station UE and the mobile switching center MME/SGSN may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE and the mobile switching center MME/SGSN. Also, the storage medium and the processor may be provided in the mobile station UE and the mobile switching center MME/SGSN as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising:
a step A of performing a synchronization process to synchronize a mobile switching center of a first communication scheme and a mobile switching center of a second communication scheme with each other in terms of bearer status of a mobile station when the mobile station with a location thereof registered with the mobile switching center of the first communication scheme and the mobile switching center of the second communication scheme changes the bearer status in a cell under the control of the mobile communication system of the first communication scheme; and
a step B of notifying, from the mobile switching center of the first communication scheme to the mobile station, that the synchronization process has been performed,
wherein if the mobile station has received the notification although the bearer status has been changed, the mobile station does not register the location with the mobile switching center of the second communication scheme when the mobile station moves from the cell under the control of the mobile communication system of the first communication scheme to a cell under the control of the mobile communication system of the second communication scheme.

2. The mobile communication method according to claim 1, further comprising the steps of:
managing by the mobile station location registration status indicating whether or not the mobile station needs to register the location with the mobile switching center of the second mobile communication scheme; and
determining by the mobile station whether or not the mobile station needs to register the location with the mobile switching center of the second communication scheme depending on the location registration status, when the mobile station moves to the cell under the control of the mobile communication system of the second communication scheme,
wherein if the mobile station has received the notification although it has changed the bearer status, the mobile station does not set the location registration status to indicate that the mobile station needs to register the location with the mobile switching center of the second communication scheme.

3. The mobile communication method according to claim 1, wherein the synchronization process is not performed if the number of bearers is 0 after the mobile station changes the bearer status, in the step A.

4. A mobile switching center of a first communication scheme, comprising:
a synchronization processing unit configured to perform a synchronization process to synchronize with a mobile switching center of a second communication system in terms of bearer status of a mobile station when the mobile station with a location thereof registered with the mobile switching center of the first communication scheme and the mobile switching center of the second communication scheme changes the bearer status in a cell under the control of a mobile communication system of the first communication scheme, and
a notifying unit configured to notify the mobile station that the synchronization process has been performed.

5. The mobile switching center according to claim 4, wherein the synchronization processing unit is configured not to perform the synchronization process if the number of bearers is 0 after the mobile station changes the bearer status.

6. A mobile station, comprising a location registration processing unit configured not to register a location thereof with a mobile switching center of a second communication scheme when the mobile station moves from a cell under the control of a mobile communication system of a first communication scheme to a cell under the control of a mobile communication system of the second communication scheme, if the mobile station has received from the mobile switching center of the first communication scheme a notification that a synchronization process has been performed to synchronize with the mobile switching center of the second communication scheme in terms of bearer status, although the mobile station with the location registered with the mobile switching center of the first communication scheme and the mobile switching center of the second communication scheme has changed the bearer status in the cell under the control of the mobile communication system of the first communication scheme.

7. The mobile station according to claim 6, further comprising a location registration status management unit configured to manage location registration status indicating whether or not the mobile station needs to register the location with the mobile switching center of the second communication scheme,
wherein the location registration processing unit is configured to determine whether or not to register the location with the mobile switching center of the second communication scheme, depending on the location registration status, when the mobile station moves to the cell under the control of the mobile communication system of the second communication scheme, and
the location registration status management unit is configured to, if the location registration status management unit has received the notification although the bearer status has been changed, not set the location registration status to indicate that the mobile station needs to register the location with the mobile switching center of the second communication scheme.
